(19) **Europäisches Patentamt**
**European Patent Office**
**Office européen des brevets**

(11) **EP 2 014 491 B1**

(12) **EUROPEAN PATENT SPECIFICATION**

(45) Date of publication and mention
of the grant of the patent:
**02.06.2010 Bulletin 2010/22**

(51) Int Cl.:
***B60H 1/00*** *(2006.01)* ***B60H 1/32*** *(2006.01)*

(21) Application number: **08159909.4**

(22) Date of filing: **08.07.2008**

(54) **Control apparatus for a vehicle air conditioner**

Steuervorrichtung für die Klimaanlage eines Fahrzeugs

Appareil de contrôle pour climatiseur de véhicule

(84) Designated Contracting States:
**DE FR**

(30) Priority: **09.07.2007 JP 2007180023**

(43) Date of publication of application:
**14.01.2009 Bulletin 2009/03**

(73) Proprietor: **DENSO CORPORATION**
**Kariya-city, Aichi-pref., 448-8661 (JP)**

(72) Inventors:
• **Miwa, Nobuya**
**Kariya-city Aichi 448-8661 (JP)**

• **Kamiya, Naoyuki**
**Kariya-city Aichi 448-8661 (JP)**
• **Iwase, Noriaki**
**Kariya-city Aichi 448-8661 (JP)**

(74) Representative: **TBK-Patent**
**Bavariaring 4-6**
**80336 München (DE)**

(56) References cited:
**WO-A-2006/024168 WO-A-2006/108521**
**FR-A- 2 820 369**

**EP 2 014 491 B1**

**Description**

The present invention relates to a control apparatus for a vehicle air conditioner for performing an air conditioning operation of a passenger compartment of a vehicle. More particularly, the present invention relates to a control apparatus for a vehicle air conditioner that is capable of storing a part of cold generated in a refrigerant cycle during an operation of a compressor in a cold storage and using the cold stored in the cold storage for the air conditioning operation when the compressor is stopped.

In general, a compressor of a refrigerant cycle of a vehicle air conditioner is generally driven by motive power of an engine. Therefore, fuel efficiency of the engine is reduced during an air conditioning operation because of the motive power required to drive the compressor.

The document FR-A-2 820 369 discloses as closest prior art an air conditioning apparatus for a vehicle comprising a control means which is adapted to carry out an air conditioning operation in a passenger compartment of the vehicle using cold generated in a refrigerant cycle while storing a part of the cold in a cold storage of the refrigerant cycle when a compressor of the refrigerant cycle is operated by an engine of the vehicle, and capable of performing an air conditioning operation using the cold stored in the cold storage when the compressor is stopped. For controlling an operation of the compressor, the cold generation efficiency of the refrigerant cycle as well as a quantity of cold stored in the cold storage is determined.

Furthermore, Japanese Unexamined Patent Application Publication No. 2000-355214 describes a method of reducing the number of operations of the compressor so as to improve fuel consumption of the engine. Specifically, excess cold generated in a refrigerant cycle during an operation of the compressor is stored in a cold storage, as an auxiliary cold source, and the stored cold is used in an auxiliary manner. When the temperature of storage medium of the cold storage is equal to or lower than a freezing point during the operation of the compressor, the operation of the compressor is stopped, and the cold is released from the cold storage so as to continue a cooling operation. When a predetermined period of time elapses since the releasing of the cold begun, the cooling operation using the cold storage is stopped, and the storing of the cold in the cold storage is restarted by starting the operation of the compressor.

In fact, a fuel consumption rate of an engine varies depending on operation conditions of the engine, such as engine torque and engine rotational speed. Further, a fuel consumption rate required to drive the compressor varies depending on the operation conditions of the engine. In the case where the operation timing of the compressor is determined based on the temperature of the storage medium of the cold storage and the period of time of releasing the cold, irrespective of the fuel consumption rate of the engine, the compressor may be operated in an engine operation region where the fuel consumption rate is high. In such a case, it will be difficult to achieve the effect of improving the fuel consumption.

The present invention is made in view of the foregoing matter, and it is an object of the present invention to provide a control apparatus for a vehicle air conditioner having a cold storage, capable of controlling an operation of a compressor such that an effect of improving fuel consumption is achieved.

According to an aspect of the present invention, a control apparatus is for a vehicle air conditioner that is capable of performing an air conditioning operation of a passenger compartment of the vehicle using cold generated in a refrigerant cycle while storing a part of the cold in a cold storage of the refrigerant cycle when a compressor of the refrigerant cycle is operated by an engine of the vehicle, and performing an air conditioning operation by releasing the cold from the cold storage when the compressor is stopped. The control apparatus includes cold generation efficiency determination means adapted to determine cold generation efficiency of the refrigerant cycle, cold quantity determination means adapted to determine a quantity of cold stored in the cold storage, and control means adapted to control an operation of the compressor based on the cold generation efficiency of the refrigerant cycle and the quantity of cold of the cold storage.

In this construction, when the quantity of cold in the cold storage is reduced, a region where the cold generation efficiency of the refrigerant cycle is high, that is, an engine operation region where fuel consumption is low is selected and the compressor is operated in the selected region and the cold is stored in the cold storage. Accordingly, the compressor is controlled while providing the effect of improving the fuel consumption.

Furthermore, the cold generation efficiency determination means is adapted to calculate an endothermic rate as the cold generation efficiency of the refrigerant cycle. The endothermic rate is engine fuel consumption required to generate unit cold quantity in the refrigerant cycle. The engine operation region where the fuel consumption is low can be selected by using the endothermic rate. Thus, storing of the cold in the cold storage is performed in the selected engine operation region.

According to a second aspect of the present invention, the control means is adapted to operate the compressor when the endothermic rate calculated by the cold generation efficiency determination means is equal to or lower than a determination threshold.

According to a third aspect of the present invention, the control means is adapted to set the determination threshold in accordance with the cold quantity of the cold storage determined by the cold quantity determination means.

In a region where the cold quantity of the cold storage is less than a predetermined quantity, an operation region of the compressor can be increased. Thus, the storing of the cold is effectively performed. On the other hand, in a region where the cold quantity is greater than a predetermined quantity, the operation region of the compressor is limited to the engine operation region where the fuel consumption of the engine is low. As such, it is less likely that the cold will be stored excessively in the cold storage. Because the cold quantity stored in the cold storage is effectively controlled within an appropriate range, the fuel consumption of the engine is further improved.

According to a fourth aspect of the present invention, the control means is adapted to stop the operation of the compressor when the endothermic rate calculated by the cold generation efficiency determination means exceeds the determination threshold during the operation of the compressor. In this case, the determination threshold may have predetermined hysteresis so as to reduce the number of operations of the compressor.

Other objects, features and advantages of the present invention will become more apparent from the following detailed description made with reference to the accompanying drawings, in which like parts are designated by like reference numbers and in which:

Fig. 1 is a schematic diagram of a refrigerant cycle of a vehicle air conditioner with a control system according to an embodiment of the present invention;
Fig. 2 is an example of a map of an engine fuel consumption rate determined by engine torque and an engine rotational speed according to the embodiment of the present invention;
Fig. 3 is an example of a map of a determination threshold determined by a quantity of cold stored in a cold storage of the refrigerant cycle according to the embodiment of the present invention; and
Fig. 4 is a flowchart showing a processing of a control program of the air conditioner according to the embodiment of the present invention.

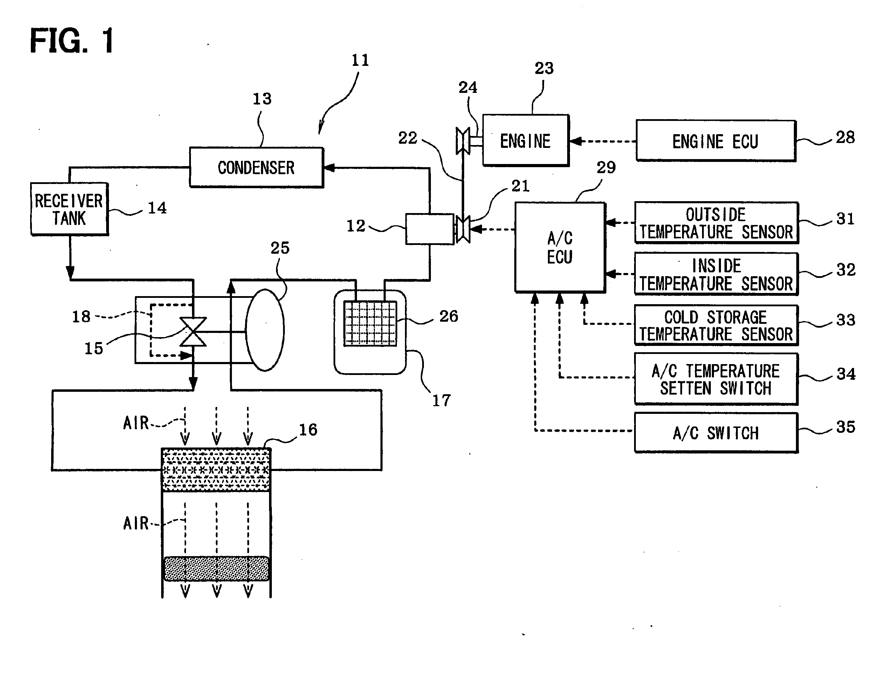

An embodiment of the present invention will now be described with reference to Figs. 1 to 4. First, an entire structure of a refrigerant cycle 11 of a vehicle air conditioner will be described with reference to Fig. 1.

The refrigerant cycle 11 generally includes a compressor 12, a condenser 13, a receiver tank 14, an expansion valve 15, an evaporator 16, a cold storage 17. The compressor 12, the condenser 13, the receiver tank 14, the expansion valve 15, the evaporator 16 and the cold storage 17 are connected through refrigerant pipes such that refrigerant circulates through a route of a discharge port of the compressor 12 → the condenser 13 → the receiver tank 14 → the expansion valve 15 → the evaporator 16 → the cold storage 17 → a suction port of the compressor 12.

When the compressor 12 is in operation, the refrigerant having high temperature and compressed by the compressor 12 is introduced to the condenser 13. In the condenser 13, the refrigerant is condensed into a liquid state by radiating heat. The liquid refrigerant is introduced to the expansion valve 15 through the receiver tank 14. In the expansion valve 15, the liquid refrigerant is expanded and becomes in a low temperature, low pressure mist state. Then, the refrigerant is introduced in the evaporator 16.

In the evaporator 16, the refrigerant is evaporated. Thus, the evaporator 16 is cooled by latent heat of evaporation of the refrigerant. As such, air passing through the evaporator 16 is cooled and then introduced into a passenger compartment of the vehicle. The refrigerant evaporated in the evaporator 16 passes through the cold storage 17 and is then drawn to the compressor 12. After being compressed by the compressor 12, the refrigerant is introduced in the condenser 13. In this way, the refrigerant circulates through the refrigerant cycle 11. An operation of the cold storage 17 will be described later in detail.

The compressor 12 is connected to a crank shaft 24 of an engine 23, which is a drive power source of a vehicle, through an electromagnetic clutch 21 and a driving belt 22. The compressor 12 is turned on and off by connection and disconnection of the electromagnetic clutch 21 during the engine 23 is in operation.

The expansion valve 15 is provided with a temperature sensor 25. The temperature sensor 25 is capable of detecting the temperature of the refrigerant discharged from the evaporator 16. A valve opening degree, that is, a throttle degree of the expansion valve 15 is automatically controlled in accordance with the temperature of the refrigerant detected by the temperature sensor 25, so that the temperature of the refrigerant discharged from the evaporator 16 is controlled to a predetermined temperature.

The refrigerant cycle 11 is further provided with a bypass passage 18. The bypass passage 18 is configured to allow the refrigerant to flow toward the evaporator 16 while bypassing the expansion valve 15, when the expansion valve 15 is in a valve closed condition.

When the compressor 12 is stopped, that is, in nonoperation, the expansion valve 15 is maintained in the valve closed condition so that a communication between the receiver tank 14 and an inlet of the evaporator 16 through the expansion valve 15 is intercepted. In this case, since the bypass passage 18 is provided, the condenser 13 is maintained to be in communication with the evaporator 16 and the cold storage 17 through the bypass passage 18. Therefore, the refrigerant remained in the condenser 13 flows to the evaporator 16 and the cold storage 17 through the bypass passage 18 as long as differential pressure exists between the condenser 13 and the cold storage 17.

The cold storage 17 has storage medium 26 therein. When the compressor 12 is in operation, the refrigerant discharged from the evaporator 16 flows in the cold storage 17. Thus, in the cold storage 17, heat exchange is performed between the refrigerant and the storage medium 26, and hence cold of the refrigerant is stored in the storage medium 26. The refrigerant, which has released the cold, that is, has been heated in the cold storage 17 due to heat exchange with the storage medium 26, is discharged from the cold storage 17 and is drawn to the compressor 12.

Operation conditions of the engine 23, such as ignition, fuel injection and the like, are controlled by an engine ECU 28.

The operation of the compressor 12, such as, the connection and disconnection of the electromagnetic clutch 21 is controlled by an air conditioner ECU 29. The air conditioner ECU 29 reads signals outputted from various devices such as an outside temperature sensor 31, an inside temperature sensor 32, a cold storage temperature sensor 33, an air conditioning temperature setting switch 34, an air conditioner switch 35 and the like.

The outside temperature sensor 31 is capable of detecting the temperature outside of the vehicle. The inside temperature sensor 32 is capable of detecting the temperature inside of the passenger compartment. The cold storage temperature sensor 33 is capable of detecting the temperature of the storage medium 26. The air conditioning temperature setting switch 34 enables to set the temperature for the air conditioning operation, such as the temperature for the cooling operation. The air conditioner switch 35 enables to turn on and off the air conditioning operation.

The air conditioner ECU 29 controls the operation of the compressor 12, that is, the connection and disconnection of the electromagnetic switch 12 such that the temperature inside of the passenger compartment is controlled to the set temperature when the air conditioner is in operation, that is, when the air conditioner switch 35 is on. When the operation of the compressor 12 is stopped, although the expansion valve 15 is maintained in the valve closed condition, the refrigerant flows in the evaporator 16 through the bypass passage 18, and thus the evaporator 16 is cooled. Therefore, the air passing through the evaporator 16 is cooled and is then introduced in the passenger compartment.

The air conditioner ECU 29 calculates fuel consumption of the engine 23 that is required to generate unit endothermic quantity (unit cold quantity) in the refrigerant cycle 11 during the air conditioning operation, as cold generation efficiency of the refrigerant cycle 11, based on the following equation 1. Hereinafter, this fuel consumption is defined as an endothermic rate $ER$.

$$ER \, (g/kWh) = \frac{FC_1 \, (g/h)}{EQ \, (kW)} = \frac{FC_2 \, (g/h)}{EQ \, (kW)} \qquad [Eq.1]$$

where: $EQ$ is a required endothermic quantity (required cold quantity) (kW) required to control the temperature inside of the passenger compartment to the set temperature, which is desired by a user, such as a driver; $FC_1$ is fuel consumption (g/h) required to generate the required endothermic quantity; $FC_2$ is fuel consumption (g/h) required to drive the compressor; and.

The required endothermic quantity $EQ$ is given by the following equation.

$$EQ \, (kW) = CP \, (kW) \times ACQ$$

where: $CP$ (kW) is required compressor power; and $ACQ$ is air conditioning efficiency.

Further, the required compressor power $CP$ is compressor power ($CP_1$) when compressor torque is T (required torque) that is needed to control the temperature inside of the passenger compartment to the set temperature desired by the user. The required compressor power $CP$ is given by a map or a numerical formula based on the temperature inside of the passenger compartment, the outside temperature, the humidity, and the set temperature.

The air conditioning efficiency $ACQ$ is efficiency to convert the compressor power into an endothermic quantity (cold quantity). The air conditioning efficiency $ACQ$ is given by a map or a numerical formula based on the temperature inside of the passenger compartment, the outside temperature, the temperature of the refrigerant discharged from the evaporator 16, a discharge pressure of the compressor 12 and the like.

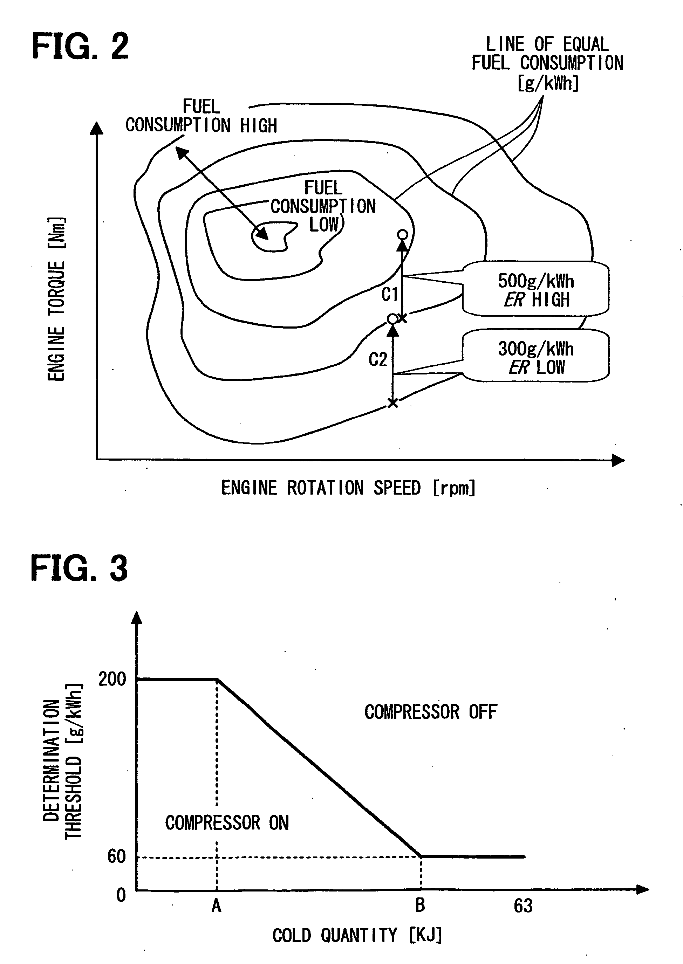

In the equation 1, the fuel consumption $FC_2$ is given from a map of an engine fuel consumption rate shown in Fig. 2. In the map of Fig. 2, the engine fuel consumption rate is determined by engine torque and engine rotational speed as parameters. The fuel consumption $FC_2$ is given by a difference between fuel consumption $FC_0$ when the compressor torque is zero (symbol $\times$) and fuel consumption $FC_T$ when the compressor torque is the required torque T (symbol o). For example, in Fig. 2, even if a case C1 and a case C2 have the same compressor torque, the fuel consumption rates thereof are different.

Further, the equation 1 can be transformed into the following equation 2.

$$ER\,(\text{g/kWh}) = \frac{FC_0(\text{g/h}) - FC_T(\text{g/h})}{CP(\text{kW}) \times ACQ} = \frac{FC_0(\text{g/h}) - FC_T(\text{g/h})}{CP_i(\text{kW}) \times ACQ} \qquad [Eq.2]$$

The air conditioner ECU 29 compares a current endothermic rate, which is calculated from the equation 2, with a determination threshold. When the current endothermic rate is equal to or less than the determination threshold, the air conditioner ECU 29 operates the compressor 12 by the motive power of the engine 23. When the current endothermic rate exceeds the determination threshold during the operation of the compressor 12, the air conditioner ECU 29 stops the operation of the compressor 12.

Here, the determination threshold can be a predetermined constant value. Alternatively, the determination threshold can be set in accordance with the cold quantity stored in the cold storage 17 using a map shown in Fig. 3. In the map of Fig. 3, the determination threshold is determined based on the cold quantity stored in the cold storage 17 as a parameter.

As shown in Fig. 3, the determination threshold is an upper limit in a region where the cold quantity of the cold storage 17 is equal to or less than a predetermined value *A*. Also, the determination threshold is a lower limit in a region where the cold quantity of the cold storage 17 is equal to or higher than a predetermined value *B*. In a region where the cold quantity of the cold storage 17 is between the predetermined value *A* and the predetermined value *B*, the determination threshold reduces as the cold quantity increases.

As such, in the region where the cold quantity of the cold storage 17 is small, an operation region of the compressor 12 is increased. Therefore, it is possible to smoothly store the cold in the cold storage 17. On the other hand, in the region where the cold quantity of the cold storage 17 is large, the operation region of the compressor 12 is limited to an engine operation region where the fuel consumption is lower. Therefore, it is possible to restrict the cold from being excessively stored in the cold storage 17. Accordingly, the cold quantity of the cold storage 17 is effectively controlled within an appropriate range without deteriorating the average fuel consumption. In this case, the cold quantity of the cold storage 17 can be calculated from a map or a numerical formula based on the temperature of the storage medium 26 detected by the cold storage temperature sensor 33.

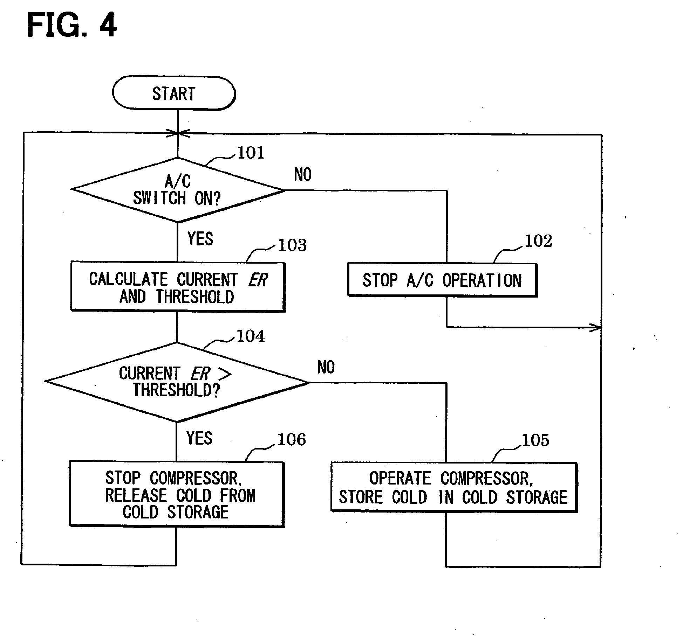

The control of the air conditioning operation as discussed in the above is executed by the air conditioner ECU 29 in accordance with an air conditioning operation control program shown in Fig. 4.

First, at a step 101, a condition of the air conditioner switch 35 is determined. When it is determined at the step 101 that the air conditioner switch 35 is off, the operations of the compressor 12 and a blower (not shown) are stopped at a step 102. Therefore, the air conditioning operation is stopped, or nonoperation condition of the air conditioner is maintained.

Then, when it is determined at the step 101 that the air conditioner switch 35 is on, the processing proceeds to a step 103. At the step 103, the current endothermic rate is calculated based on the map of the fuel consumption rate of Fig. 2 and the equation 2. Also, at the step 103, the cold quantity of the cold storage 17 is calculated based on the temperature of the storage medium 26 detected by the cold storage temperature sensor 33 using the map or the numerical formula, and the determination threshold corresponding to the current cold quantity is calculated referring to the map of the determination threshold of Fig. 3. The processing of the step 103 serves as cold generation efficiency determination means and cold quantity determination means.

At a step 104, the current endothermic rate is compared with the calculated determination threshold. When it is determined at the step 104 that the current endothermic rate is equal to or lower than the determination threshold, the processing proceeds to a step 105. At the step 105, the compressor 12 is operated by connecting the electromagnetic clutch 21 and the blower is operated. During the operation of the compressor 12, the refrigerant discharged from the compressor 12 is circulated in the refrigerant cycle 11 through the route of the condenser 13 → the receiver tank 14 → the expansion valve 15 → the evaporator 16 → the cold storage 17 → the suction port of the compressor 12. In this case, since the evaporator 16 is cooled by the evaporation of the refrigerant flowing inside of the evaporator 16, the air flowing around the evaporator 16 is cooled. The cooled air is introduced in the passenger compartment of the vehicle. Also, since the refrigerant discharged from the evaporator 16 flows in the cold storage 17 and exchanges heat with the storage medium 26. Therefore, the cold of the refrigerant is stored in the storage medium 26.

When it is determined at the step 104 that the current endothermic rate is larger than the determination threshold during the operation of the compressor 12, the processing proceeds to a step 106. At the step 106, the compressor 12 is stopped by disconnecting the electromagnetic clutch 21, but the blower is operated. When the compressor 12 is stopped, that is, in nonoperation, the expansion valve 15 is maintained in the valve closed condition. At this time, the refrigerant flows in the evaporator 16 through the bypass passage 18 until the pressure in the condenser 13 and the pressure in the cold storage 17 become equal. Thus, the evaporator 16 is cooled, and the air cooled by the evaporator 16 is introduced into the passenger compartment. In this case, the determination threshold may have appropriate hysteresis so as to reduce the number of operations of the compressor 12. The processing of the steps 104 to 106 serves as control means.

In the present embodiment as discussed above, the fuel consumption of the engine 23 required to generate the unit endothermic quantity (unit cold quantity) in the refrigerant cycle 11 is calculated as the endothermic rate. The calculated endothermic rate is compared with the determination threshold. In the region where the endothermic rate is equal to or less than the determination threshold, the compressor 12 is operated so that the refrigerant discharged from the compressor 12 is introduced in the evaporator 16 and the cold storage 17. Thus, the air conditioning operation of the passenger compartment is performed using the evaporator 16 as the cold source, and the cold is stored in the cold storage 17. On the other hand, in the region where the endothermic rate is greater than the determination threshold, the compressor 12 is stopped. In this case, the evaporator 16 is cooled by returning the cold of the cold storage 17 to the evaporator 16. Thus, the air passing through the evaporator 16 is cooled and then introduced in the passenger compartment.

In this configuration, when the cold quantity of the cold storage 17 is reduced, the engine operation region where the endothermic rate is small, that is, where the fuel consumption is small is selected. Thus, the compressor 12 can be operated in the selected engine operation region so as to store the cold in the cold storage 17. Therefore, an effect of improving the fuel consumption is achieved.

Exemplary embodiment of the present invention is described above. However, the present invention is not limited to the above described exemplary embodiment, but may be implemented in various other ways without departing from the scope of the invention. For example, the structure of the refrigerant cycle 11 may be modified in various ways. In the above exemplary embodiment, the evaporator 16 and the cold storage 17 are connected in series in the refrigerant cycle 11. Alternatively, the evaporator 16 and the cold storage 17 can be connected in parallel in the refrigerant cycle 11.

In the above exemplary embodiment, the cold generation efficiency (endothermic rate) of the refrigerant cycle 11 is calculated based on the equations 1, 2. However, the cold generation efficiency can be calculated based on another equation. When the compressor 12 is in nonoperation, air can be applied to flow along the sold storage 17 so as to generate cold air by the cold storage 17.

Use of the control operation of the present invention is not limited in a vehicle only having the engine 23 as the drive source. The control operation of the present invention will be employed to another vehicle, such as a hybrid vehicle having an engine and a motor as the drive source.

Additional advantages and modifications will readily occur to those skilled in the art. The invention in its broader term is therefore not limited to the specific details, representative apparatus, and illustrative examples shown and described.

## Claims

1. A control apparatus for an air conditioner of a vehicle, the air conditioner capable of performing an air conditioning operation of a passenger compartment of the vehicle using cold generated in a refrigerant cycle (**11**) while storing a part of the cold in a cold storage (**17**) of the refrigerant cycle (**11**) when a compressor (**12**) of the refrigerant cycle (**11**) is operated by an engine of the vehicle, and capable of performing an air conditioning operation using the cold stored in the cold storage (**17**) when the compressor (**12**) is stopped, the control apparatus **characterized by** comprising:

   cold generation efficiency determination means (**S103**) adapted to determine cold generation efficiency of the refrigerant cycle (**11**);
   cold quantity determination means (**S103**) adapted to determine a quantity of cold stored in the cold storage (**17**); and
   control means (**S104-S106**) adapted to control an operation of the compressor (**12**) based on the cold generation efficiency of the refrigerant cycle and the quantity of cold of the cold storage (**17**)

   **characterized in that**
   the cold generation efficiency determination means is adapted to calculate an endothermic rate (**ER**) as the cold generation efficiency of the refrigerant cycle (**11**), the endothermic rate (**ER**) being fuel consumption of the engine required to generate unit cold in the refrigerant cycle (**11**).

2. The control apparatus for the air conditioner according to claim 1, wherein
   the control means is adapted to operate the compressor (**12**) by the engine when the endothermic rate (**ER**) calculated by the cold generation efficiency determination means is equal to or less than a determination threshold.

3. The control apparatus for the air conditioner according to claim 2, wherein

the control means is adapted to set the determination threshold in accordance with the quantity of cold of the cold storage (**17**) determined by the cold quantity determination means.

4. The control apparatus for the air conditioner according to any one of claims 2 to 3, wherein
the control means is adapted to stop the compressor (**12**) when the endothermic rate (**ER**) calculated by the cold generation efficiency determination means exceeds the determination threshold when the compressor (**12**) is in operation.

**Patentansprüche**

1. Steuervorrichtung für eine Klimaanlage eines Fahrzeugs, wobei die Klimaanlage in der Lage ist, einen Klimaanlagebetrieb eines Fahrgastraums des Fahrzeugs unter Verwendung einer in einem Kältemittelkreislauf (11) erzeugten Kälte durchzuführen, während ein Teil der Kälte in einem Kältespeicher (17) des Kältemittelkreislaufs (11) gespeichert wird, wenn ein Kompressor (12) des Kältemittelkreislaufs (11) durch einen Motor des Fahrzeugs betrieben wird, und in der Lage ist, einen Klimaanlagebetrieb unter Verwendung der in dem Kältespeicher (17) gespeicherten Kälte durchzuführen, wenn der Kompressor (12) angehalten wird, wobei die Steuervorrichtung Folgendes aufweist:

eine Kälteerzeugungseffizienzbestimmungseinrichtung (S103), die angepasst ist, um eine Kälteerzeugungseffizienz des Kältemittelzyklus (11) zu bestimmen;
eine Kältequantitätsbestimmungseinrichtung (S103), die angepasst ist, um eine Quantität einer in dem Kältespeicher (17) gespeicherten Kälte zu bestimmen; und
eine Steuereinrichtung (S104-S106), die angepasst ist, um einen Betrieb des Kompressors (12) basierend auf der Kälteerzeugungseffizienz des Kältemittelzyklus und der Quantität einer Kälte des Kältespeichers (17) zu steuern,

**dadurch gekennzeichnet, dass**
die Kälteerzeugungseffizienzbestimmungseinrichtung angepasst ist, um eine endotherme Rate (ER) als die Kälteerzeugungseffizienz des Kältemittelzyklus (11) zu berechnen, wobei die endotherme Rate (ER) einen Kraftstoffverbrauch des Motors darstellt, der benötigt wird, um eine Einheitskälte in dem Kältemittelzyklus (11) zu erzeugen.

2. Steuervorrichtung für die Klimaanlage nach Anspruch 1, wobei
die Steuereinrichtung angepasst ist, um den Kompressor (12) durch den Motor zu betreiben, wenn die endotherme Rate (ER), die durch die Kälteerzeugungseffizienzbestimmungseinrichtung berechnet wird, gleich oder kleiner als ein Bestimmungsschwellwert ist.

3. Steuervorrichtung für die Klimaanlage nach Anspruch 2, wobei
die Steuereinrichtung angepasst ist, um den Bestimmungsschwellwert gemäß der Quantität einer Kälte des Kältespeichers (17), die durch die Kältequantitätsbestimmungseinrichtung bestimmt wird, einzustellen.

4. Steuervorrichtung für die Klimaanlage nach einem der Ansprüche 2 und 3, wobei
die Steuereinrichtung angepasst ist, um den Kompressor (12) anzuhalten, wenn die endotherme Rate (ER), die durch die Kälteerzeugungseffizienzbestimmungseinrichtung berechnet wird, den Bestimmungsschwellwert übersteigt, wenn der Kompressor (12) in Betrieb ist.

**Revendications**

1. Appareil de commande d'un climatiseur pour un véhicule, le climatiseur pouvant exécuter une opération de climatisation d'un habitacle du véhicule en utilisant un froid généré lors d'un cycle de fluide frigorigène (11) tout en stockant une partie du froid dans un accumulateur de froid (17) du cycle de fluide frigorigène (11) quand un compresseur (12) du cycle de fluide frigorigène (11) est actionné par un moteur du véhicule, et pouvant exécuter une opération de climatisation en utilisant le froid emmagasiné dans l'accumulateur de froid (17) lorsque le compresseur (12) est arrêté, l'appareil de commande étant **caractérisé en ce qu'**il comprend :

un moyen de détermination de l'efficacité de génération de froid (103) adapté pour déterminer l'efficacité de génération de froid du cycle de fluide frigorigène (11) ;
un moyen de détermination de la quantité de froid (S103) adapté pour déterminer une quantité de froid emmagasinée dans l'accumulateur de froid (17) ; et

un moyen de commande (S104-106) adapté pour commander une opération du compresseur (12) sur la base de l'efficacité de génération de froid du cycle de fluide frigorigène (11) et de la quantité de froid dans l'accumulateur de froid (17)

**caractérisé en ce que**

le moyen de détermination de l'efficacité de génération de froid est adapté pour calculer un taux endothermique (ER) comme efficacité de génération de froid du cycle de fluide frigorigène (11), le taux endothermique (ER) étant une consommation de carburant du moteur requise pour générer un froid individuel lors du cycle de fluide frigorigène (11).

2. Appareil de commande pour le climatiseur selon la revendication 1, dans lequel

le moyen de commande est adapté pour actionner le compresseur (12) au moyen du moteur lorsque le taux endothermique (ER) calculé par le moyen de détermination de l'efficacité de génération de froid est inférieur ou égal à un seuil de détermination.

3. Appareil de commande pour le climatiseur selon la revendication 2, dans lequel

le moyen de commande est adapté pour définir le seuil de détermination en fonction de la quantité de froid dans l'accumulateur de froid (17) déterminée par le moyen de détermination de la quantité de froid.

4. Appareil de commande pour le climatiseur selon l'une quelconque des revendications 2 et 3, dans lequel

le moyen de commande est adapté pour arrêter le compresseur (12) lorsque le taux endothermique (ER) calculé par le moyen de détermination de l'efficacité de génération de froid dépasse le seuil de détermination quand le compresseur (12) fonctionne.

# FIG. 1

# FIG. 2

LINE OF EQUAL
FUEL CONSUMPTION
[g/kWh]

FUEL
CONSUMPTION HIGH

FUEL
CONSUMPTION
LOW

ENGINE TORQUE [Nm]

C1

C2

500g/kWh
*ER* HIGH

300g/kWh
*ER* LOW

ENGINE ROTATION SPEED [rpm]

# FIG. 3

DETERMINATION
THRESHOLD [g/kWh]

200

COMPRESSOR OFF

COMPRESSOR ON

60

0

A          B          63

COLD QUANTITY [KJ]

# FIG. 4

```
                    ┌─────────────┐
                    │    START    │
                    └──────┬──────┘
                           │
        ┌──────────────────┼───────────────────────────────────┐
        │                  │                                    │
        │              ╱───┴───╲      ⟋101                       │
        │            ╱    A/C    ╲         NO                    │
        │           ╱  SWITCH ON? ╲──────────────────┐          │
        │            ╲            ╱                   │          │
        │              ╲───┬───╱                     │          │
        │                  │ YES    ⟋103       ⟋102  │          │
        │          ┌───────┴────────┐   ┌────────────┴──────┐   │
        │          │CALCULATE CURRENT ER│ │ STOP A/C OPERATION │  │
        │          │  AND THRESHOLD  │   └───────────────────┘   │
        │          └───────┬────────┘                            │
        │                  │        ⟋104                         │
        │              ╱───┴───╲                                 │
        │            ╱ CURRENT ER ╲       NO                     │
        │           ╱  THRESHOLD?  ╲──────────────────┐          │
        │            ╲            ╱                    │          │
        │              ╲───┬───╱                      │          │
        │                  │ YES    ⟋106        ⟋105  │          │
        │          ┌───────┴────────┐   ┌─────────────┴───────┐  │
        │          │ STOP COMPRESSOR,│   │  OPERATE COMPRESSOR, │  │
        │          │ RELEASE COLD FROM│  │ STORE COLD IN COLD STORAGE│
        │          │  COLD STORAGE   │   └──────────────────────┘  │
        │          └───────┬────────┘                            │
        └──────────────────┘                                    │
                           └────────────────────────────────────┘
```

**EP 2 014 491 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2820369 A

- JP 2000355214 A